# EUROPÄISCHE PATENTSCHRIFT

(11) **EP 3 733 489 B1**
(45) Veröffentlichungstag und Bekanntmachung des Hinweises auf die Patenterteilung: **01.12.2021**
(21) Anmeldenummer: 20171121.5
(22) Anmeldetag: 23.04.2020
(51) Int. Cl.: B62D 65/18, B65G 21/00

(54) **BEHANDLUNGSANLAGE ZUM BEHANDELN VON WERKSTÜCKEN**
TREATMENT SYSTEM FOR TREATING WORKPIECES
INSTALLATION D'USINAGE DESTINÉE À L'USINAGE DE PIÈCES

(30) Priorität: 02.05.2019 DE 102019111267
(43) Veröffentlichungstag der Anmeldung: 04.11.2020
(73) Patentinhaber: Eisenmann GmbH, 71032 Böblingen (DE)
(72) Erfinder: Riegraf, Martin, 72766 Reutlingen (DE)
(74) Vertreter: Ostertag & Partner Patentanwälte mbB

(56) Entgegenhaltungen:
- EP-A1- 3 446 953
- US-A- 5 779 027
- US-A1- 2018 120 028

## Beschreibung

Die Erfindung betrifft eine Behandlungsanlage zum Behandeln von Werkstücken, insbesondere zum Behandeln von Fahrzeugkarosserien, mit
a) einem Fördersystem, welches eine Vielzahl von Transportwagen umfasst, mittels denen die Werkstücke auf einer Förderstrecke förderbar sind, die einen oder mehrere Kurvenabschnitte umfasst, wobei jeder Transportwagen ein Fahrwerk und eine Befestigungseinrichtung für zumindest ein Werkstück umfasst, die mittels einer Verbindungseinrichtung miteinander gekoppelt sind;
wobei
b) entlang der Förderstrecke ein Fahrraum für das Fahrwerk vorhanden ist, der durch einen Verbindungsdurchgang in Richtung nach oben mit einem Förderraum verbunden ist, derart, dass das Fahrwerk in dem Fahrraum bewegbar ist und die Befestigungseinrichtung in dem Förderraum mitgeführt wird, wobei sich die Verbindungseinrichtung durch den Verbindungsdurchgang hindurch erstreckt und wobei der Verbindungsdurchgang in dem Kurvenabschnitt einen gekrümmten Verlauf hat;
c) ein Abschirmsystem mit einer Abschirmeinrichtung vorgesehen ist, welche den Verbindungsdurchgang in einem Kurvenabschnitt abgesehen von einer beweglichen Durchgangsfensteranordnung für die Verbindungseinrichtung des Transportwagens abschirmt, wenn sich der Transportwagen in dem Kurvenabschnitt befindet.

Eine derartige Behandlungsanlage ist aus der US 2018/120028 A1 bekannt.

Entlang der Förderstrecke sind bei einer solchen Behandlungsanlage eine oder mehrere Behandlungseinrichtungen angeordnet, bei denen es sich insbesondere um eine Arbeitsstation, einen Trockner oder eine Beschichtungskabine handeln kann. Hierbei können die Werkstücke mit Materialien oder Medien behandelt werden, die bei der weiteren Förderung der Werkstücke von diesen herabfallen oder herabtropfen können. Bei der Bearbeitung in einer Arbeitsstation können ebenfalls Materialien am Werkstücke entstehen, beispielsweise beim Schleifen, die herabfallen können.

Solche Materialien und/oder Medien können durch den Verbindungsdurchgang in den Fahrraum gelangen, in dem die Fördertechnik angesiedelt ist, welche entsprechend durch solche Materialien und Medien belastet werden kann.

Insbesondere in Kurvenabschnitten muss der Verbindungsdurchgang in den meisten Fällen in horizontaler Richtung breiter werden, da die Verbindungseinrichtung der Transportwagen konstruktionsbedingt mehr Bewegungsraum bei einer Kurvenfahrt in horizontaler Richtung benötigt; dies wird weiter unten nochmals näher erläutert und deutlich. Besonders in solchen Fällen ist die Wahrscheinlichkeit nochmals erhöht, das Material durch die Durchgangsverbindung zu der Fördertechnik gelangt.

Es ist Aufgabe der Erfindung, eine Behandlungsanlage der eingangs genannten Art zu bereitzustellen, welche eine Abschirmung des Verbindungsdurchganges, d.h. eine Abschirmung des Weges zwischen dem Förderraum und dem Fahrraum, in einem Kurvenabschnitt sicher gewährleistet.

Diese Aufgabe wird unter anderem dadurch gelöst, dass
die Abschirmeinrichtung eine Vielzahl von Abschirmelementen umfasst - vorzugsweise grenzen die Abschirmelemente aneinander an, können alternativ dazu jedoch auch überlappend angeordnet sein - und dabei jedes Abschirmelement mittels einer Lagereinrichtung um eine vertikale Schwenkachse verschwenkbar gelagert ist oder dabei die Abschirmelemente an einem Endlosband befestigt sind, welches um wenigstens zwei Umlaufrollen umläuft, welche jeweils um eine vertikale Drehachse verdrehbar sind, so dass ein Abschirmtrum und ein Rückführtrum gebildet sind.

Bei einer alternativen Abwandlung umfasst die Abschirmeinrichtung ein um eine Drehachse verdrehbares Drehelement, welches einen Abschirmring mit einem Außenradius Ra oder ein Abschirm-Ringsegment mit einem Außenradius Ra definiert, wobei der Außenradius Ra größer ist als der Kurvenradius r des Kurvenabschnitts, in dem die Abschirmeinrichtung angeordnet ist.

Damit auch die Durchgangsfensteranordnung bzw. entstehende Durchgangsfenster gegen von den Werkstücken herabfallendes oder herabtropfendes Material oder Medien geschützt sind, führen die Transportwagen alternativ oder ergänzend eine oder mehrere Abdeckungen mit sich, welche so angeordnet sind, dass sie sich im Förderraum oberhalb der Durchgangsfensteranordnung oder von sich öffnenden Durchgangsfenstern befinden.

Bevorzugt ist jedes Abschirmelement zwischen einer Abschirmstellung, in welcher es den Verbindungsdurchgang abdeckt, und einer Freigabestellung, in welcher es von der Verbindungseinrichtung eines der Transportwagen passiert werden kann und ein Durchgangsfenster der Durchgangsfensteranordnung definiert, beweglich.

Damit eine Abschirmung auch nach Durchfahren des Transportwagens sichergestellt ist, ist vorzugsweise jedes Abschirmelement mittels seiner Lagereinrichtung unter Federvorspannung in Richtung auf die Abschirmstellung vorgespannt.

Vorteilhaft kann dabei wenigstens eine der Umlaufrollen mittels eines Motors angetrieben werden.

Es ist günstig, wenn es in wenigstens einem Abschnitt des Endlosbandes keine oder verkürzte Abschirmelemente gibt, so dass dort ein Durchgangsfenster der Durchgangsfensteranordnung ausgebildet ist.

Außerdem kann vorteilhaft eine Führungsstruktur, insbesondere ein Führungsblech oder Führungsrollen, für das Endlosband vorgesehen sein, welche derart eingerichtet ist, dass das Abschirmtrum des Endlosbandes dem gekrümmten Verlauf des Verbindungsdurchgangs im Kurvenabschnitt folgt, so dass die Abschirmelemente sich beim Umlauf des Endlosbandes im Bereich des Abschirmtrums horizontal über den Verbindungsdurchgang hinweg erstrecken. Dabei müssen die Abschirmelemente als solche nicht zwingend horizontal ausgerichtet sein, horizontal meint hier lediglich die Richtung.

Vorteilhaft ist es dann, wenn das Drehelement mittels eines Motors verdrehbar ist und/oder der Abschirmring oder das Abschirm-Ringsegment horizontal ausgerichtet ist.

Wenn der Abschirmring als Konus oder das Abschirm-Ringsegment konisch ausgebildet ist und in einen Auffangbehälter münden, können Material oder Medien, die von den Werkstücken herabfallen oder herabtropfen, vorteilhaft aufgefangen und gesammelt werden.

Vorzugsweise sind ein oder mehrere Durchgangsfenster der Durchgangsfensteranordnung durch eine oder mehrere radial außen am Abschirmring oder am Abschirm-Ringsegment vorgesehene Materialaussparungen ausgebildet.

Nachfolgend werden nun Ausführungsbeispiele der Erfindung anhand der Zeichnungen näher erläutert. In diesen zeigen.
- Figur 1: schematisch einen Querschnitt einer Behandlungsanlage mit einem Förderraum, der durch einen Verbindungsdurchgang mit einem darunter angeordneten Fahrraum für ein Fördersystem verbunden ist, mittels welchem Werkstücke auf einer Förderstrecke gefördert werden, welche Kurvenabschnitte umfasst, wobei das Fördersystem eine Vielzahl von schienengebundenen Transportwagen umfasst;
- Figuren 2, 3 und 4: Teil-Längsschnitte der Behandlungsanlage, welche verschiedene Ausführungsbeispiele von schienengebundenen Transportwagen veranschaulichen;
- Figur 5: einen der Figur 1 entsprechenden schematischen Querschnitt eines Ausführungsbeispiels, bei dem das Fördersystem eine Vielzahl von freifahrenden Transportwagen umfasst;
- Figuren 6, 7 und 8: Teil-Längsschnitte der Behandlungsanlage entsprechend den Figuren 2, 3 und 4, welche verschiedene Ausführungsbeispiele von freifahrenden Transportwagen veranschaulichen;
- Figur 9: eine Ansicht von oben auf einen Kurvenabschnitt der Förderstrecke, wobei drei unterschiedliche Positionen A, B und C der Transportwagen nach den Figuren 2 oder 3 veranschaulicht sind;
- Figur 10: eine Ansicht von oben auf einen Kurvenabschnitt der Förderstrecke, wobei drei unterschiedliche Positionen A, B und C eines Transportwagens nach den Figuren 4, 7 oder 8 veranschaulicht sind;
- Figur 11: eine Ansicht von oben auf einen Kurvenabschnitt der Förderstrecke mit einem Abschirmsystem gemäß einem ersten Ausführungsbeispiel zur Abschirmung des Verbindungsdurchgangs, wobei eine Situation A ohne Transportwagen und eine Situation B mit einem Transportwagen nach den Figuren 2 oder 3 im Kurvenabschnitt gezeigt ist;
- Figur 12: eine Ansicht von oben auf einen Kurvenabschnitt der Förderstrecke mit einem Abschirmsystem gemäß einem zweiten Ausführungsbeispiel zur Abschirmung des Verbindungsdurchgangs;
- Figur 13: eine Ansicht von oben auf einen Kurvenabschnitt der Förderstrecke mit einem Abschirmsystem gemäß einem dritten Ausführungsbeispiel zur Abschirmung des Verbindungsdurchgangs, wobei drei unterschiedliche Positionen A, B und C eines Transportwagens nach den Figuren 2 oder 3 veranschaulicht sind;
- Figur 14: einen der Figur 1 entsprechenden Querschnitt des Kurvenabschnitts nach Figur 13;
- Figur 15: eine Ansicht von oben auf einen Kurvenabschnitt der Förderstrecke mit einem Abschirmsystem gemäß einem vierten Ausführungsbeispiel zur Abschirmung des Verbindungsdurchgangs, wobei drei unterschiedliche Positionen A, B und C eines Transportwagens nach den Figuren 2 oder 3 veranschaulicht sind
- Figur 16: einen der Figur 1 entsprechenden Querschnitt des Kurvenabschnitts nach Figur 15.

Die Figuren illustrieren schematisch eine insgesamt mit 10 bezeichnete Behandlungsanlage zur Behandlung von Werkstücken 12, welche beispielhaft als Fahrzeugkarosserien 14 veranschaulicht sind.

Die Behandlungsanlage 10 umfasst eine Behandlungseinrichtung 16 mit einem Gehäuse 18, welches einen Behandlungsraum 20 definiert. Bei einem Ausführungsbeispiel ist die Behandlungseinrichtung 16 eine Arbeitsstation 22, in welcher Montagearbeiten, Qualitätskontrollarbeiten oder dergleichen vorgenommen werden und bei welcher der Behandlungsraum 20 nach oben offen und zu allen Seiten offen sein kann.

Im Folgenden wird die Erfindung allerdings am Beispiel einer Behandlungseinrichtung 16 erläutert, bei welcher der Behandlungsraum 20 als Behandlungstunnel 24 ausgebildet ist und zwei Tunnelwände in Form von Seitenwänden 26 sowie zwei weitere Tunnelwände in Form einer Decke 28 und eines Bodens 30 umfasst. Unabhängig von seiner konkreten Ausbildung, d.h. ob offen oder geschlossen, hat der Behandlungsraum 20 in jedem Fall einen Boden 30.

Auch in einem in dieser Weise geschlossenen Behandlungsraum 20 kann die Behandlungseinrichtung 16 eine Arbeitsstation 22 sein. Eine solche Behandlungseinrichtung 16 mit Tunnelwänden 26, 28 und 30 kann insbesondere ein Trockner 32 sein, bei dem der Behandlungstunnel 24 einen Trockentunnel vorgibt. Eine solche Behandlungseinrichtung 16 kann auch eine Beschichtungseinrichtung mit einem entsprechenden Behandlungstunnel sein, in dem die Werkstücke 12 insbesondere automatisch mit Hilfe von Lackierrobotern oder manuell lackiert werden.

Die Werkstücke 12 werden mit einem Fördersystem 34 auf einer Förderstrecke 36 durch den Behandlungsraum 20, d.h. hier den Behandlungstunnel 24 der Behandlungseinrichtung 16 hindurch und auch außerhalb der Behandlungseinrichtung 16 gefördert. In letzterem Fall zum Beispiel zwischen zwei Behandlungseinrichtungen 16, die entlang der Förderstrecke 36 vorhanden sind, oder auf dem Weg zu der Behandlungsanlage 10 hin oder auf dem Weg von der Behandlungsanlage 10 weg.

Entlang der Förderstrecke 36 bewegen sich die Werkstücke 12 somit in einem Förderraum 38 oberhalb von dem Boden 30, der sich entlang der Förderstrecke 36 erstreckt und somit auch vor und/oder hinter der Behandlungseinrichtung 16 vorhanden ist. Im Bereich der Behandlungseinrichtung 16 fällt der Förderraum 38 mit deren Behandlungsraum 20 zusammen. Der Förderraum 38 kann demzufolge ebenfalls offen oder geschlossen sein.

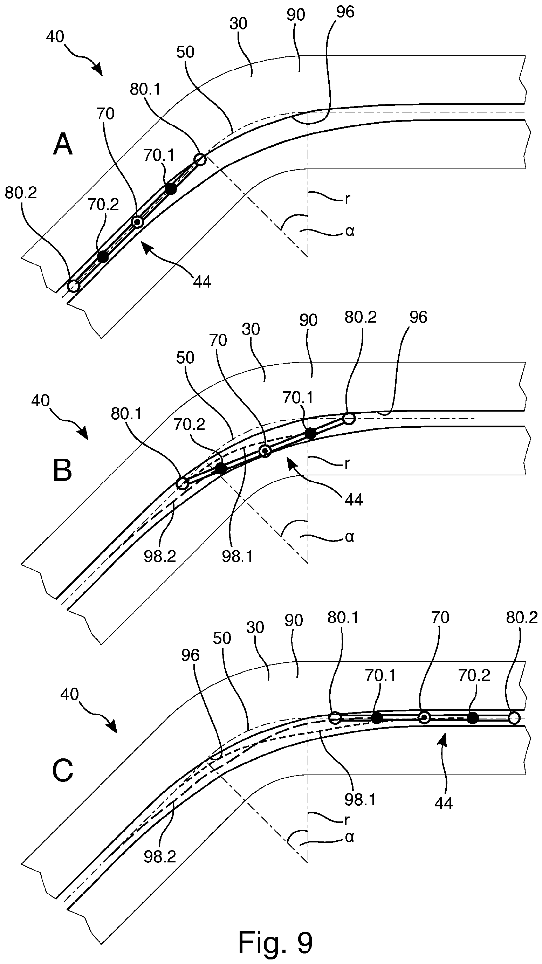

Die Förderstrecke 36 umfasst einen oder mehrere Kurvenabschnitte 40, von denen einer in den Figuren 9 bis 13 und 15 von oben gezeigt ist. Ein Kurvenabschnitt 40 kann im Bereich und/oder außerhalb der Behandlungseinrichtung 16 vorhanden sein.

Die Behandlungseinrichtung 16 wird im Durchlauf betrieben und hat dementsprechend an einem stirnseitigen Ende einen Eingang und am gegenüberliegenden stirnseitigen Ende einen Ausgang, die hier nicht gesondert gezeigt und bezeichnet sind. Kurvenabschnitte 40 können in diesem Fall sowohl in der Behandlungseinrichtung 16 als auch außerhalb derselben vorhanden sein. Der Behandlungsraum 20 kann aber auch als Batch-System ausgelegt sein und gegebenenfalls nur einen einzigen Zugang haben, über den die Werkstücke 12 in den Behandlungsraum hinein und nach der Behandlung auch wieder aus diesem heraus gefördert werden. Die Förderstrecke 36 umfasst dann Kurvenabschnitte 40 insbesondere außerhalb einer solchen Batch-Behandlungseinrichtung 16, aber auch in diesem Fall kann ein Kurvenabschnitt 40 in der Behandlungseinrichtung 16 vorhanden sein.

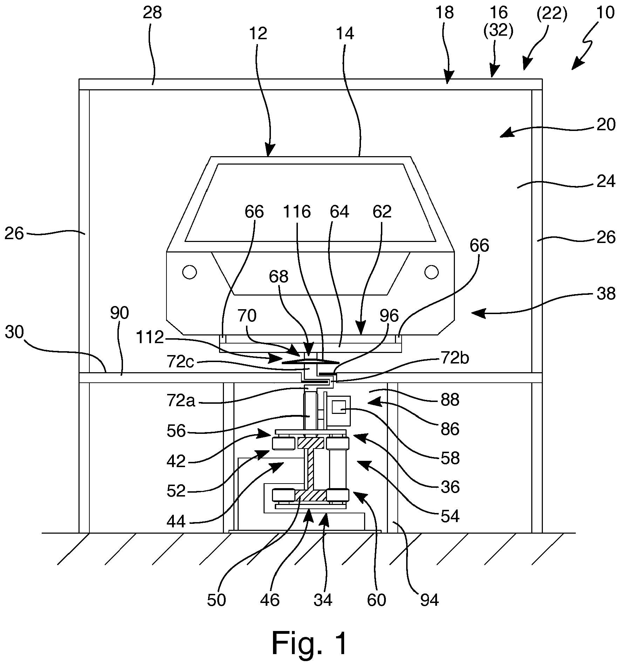

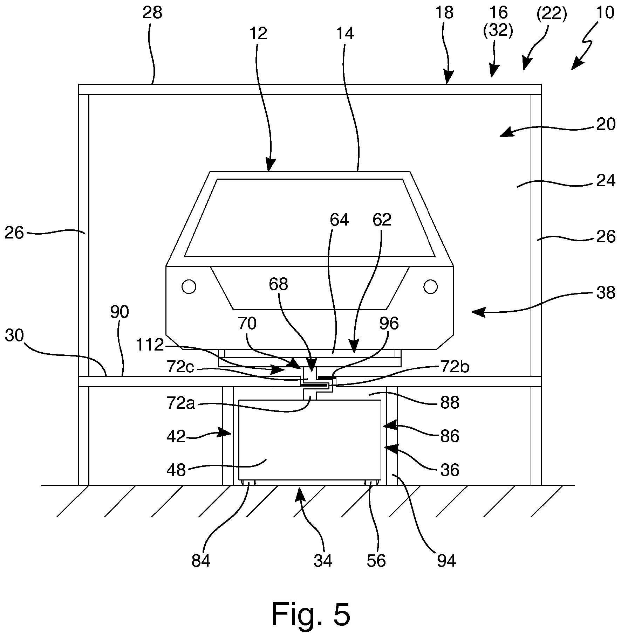

Das Fördersystem 34 umfasst eine Vielzahl von Transportwagen 42, auf denen die Werkstücke 12 transportiert werden. Die Transportwagen 42 sind bei einer ersten Alternative schienengebundene Transportwagen 44, die nachfolgend kurz als Schienenwagen 44 bezeichnet werden, und werden auf einem Schienensystem 46 verfahren, was in den Figuren 1 bis 4 und 14 veranschaulicht ist. Bei einer zweiten Alternative, die in den Figuren 5 bis 8 und 16 illustriert ist, sind die Transportwagen 42 als freifahrende Transportwagen 48 im Sinne von fahrerlosen Transportsystemen ausgebildet, die dem Fachmann als sogenannte FTS geläufig sind, und daher nachfolgend kurz als FTS-Wagen 48 bezeichnet werden.

Wenn nachfolgend allgemein der Transportwagen 42 beschrieben wird, gilt das dazu Gesagte sowohl für einen Schienenwagen 44 als auch für einen FTS-Wagen 48, sofern nicht explizit auf einen Unterschied hingewiesen wird. Dementsprechend tragen bei den Schienenwagen 44 und bei den FTS-Wagen 48 funktional einander entsprechende Bauteile und Komponenten dieselben Bezugszeichen.

Das vorliegende Schienensystem 46 für die Schienenwagen 44 ist einspurig ausgebildet und umfasst eine Tragschiene 50, auf welcher ein Schienenwagen 44 verfährt und welche beim vorliegenden Ausführungsbeispiel als an und für sich bekanntes I-Profil ausgebildet ist. Aber auch andere Profile sind möglich. Das Schienensystem 46 kann auch mehrspurig, insbesondere zweispurig sein. Die Tragschiene 50 ist bodengebunden und am Boden der Behandlungsanlage 10 verankert.

Jeder Transportwagen 42 umfasst ein Fahrwerk 52 und ein Antriebssystem 54 mit wenigstens einer Antriebsrolle 56, die mittels eines Antriebsmotors 58 angetrieben werden kann. Beim Schienenwagen 44 läuft die Antriebsrolle 56 an der Tragschiene 50 ab, beim FTS-Wagen 48 läuft die Antriebsrolle 56 auf dem Boden der Behandlungsanlage 10 ab und ist durch eine entsprechende Lenkeinrichtung lenkbar. Die Transportwagen 42 sind auf diese Weise unabhängig voneinander antreibbar.

Beim vorliegenden Ausführungsbeispiel der Schienenwagen 44 läuft die Antriebsrolle 56 auf der Oberseite der Tragschiene 50 ab. Bei einer Abwandlung kann die Antriebsrolle 56 auch seitlich an der Tragschiene 50 angreifen. In diesem Fall ist anstelle der Antriebsrolle 56 eine passiv mitlaufende Tragrolle vorhanden, welche die Last aufnimmt. Wenn die Antriebrolle 56 auf der Oberseite der Tragschiene 50 abläuft, übernimmt die Antriebsrolle 56 die Aufgabe einer lastaufnehmenden Tragrolle. Gegebenenfalls können in diesem Fall dennoch ergänzende lastaufnehmende Tragrollen vorhanden sein.

Zusätzlich zu oder anstelle von den hier erläuterten Transportwagen 42 mit jeweils einem eigenem mitgeführten Antriebssystem 54 können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 42 können entsprechend auch unabhängig von anderen Antriebseinrichtungen angetrieben und verfahren werden.

Um zu verhindern, dass der Schienenwagen 44 in Transportrichtung oder quer zur Transportrichtung verkippt, ist ein Stützsystem 60 mit Stützrollen vorgesehen, die an der Tragschiene 50 anliegen und in an und für sich bekannter Art und Weise ein entsprechendes Verkippen des Schienenwagens 44 unterbinden.

Der Transportwagen 42 umfasst eine Befestigungseinrichtung 62, an welche ein Werkstück 12 oder ein entsprechender Werkstückträger für Werkstücke 12 befestigt werden kann. Für die Befestigung von Fahrzeugkarosserien 14 umfasst die Befestigungseinrichtung 62 beim vorliegenden Ausführungsbeispiel ein Tragprofil 64 mit Lagerbolzen 66, die in an und für sich bekannter Art und Weise mit Gegenelementen an der Fahrzeugkarosserie 14 zusammenarbeiten, so dass die Fahrzeugkarosserie 14 an der Befestigungseinrichtung 62 fixiert werden kann. Die Befestigungseinrichtung 62 kann auch mehrere Sätze von solchen Lagerbolzen 66 aufweisen, die an unterschiedliche Fahrzeugkarosserien 14 mit verschiedenen Abmessungen und Ausgestaltungen angepasst sind, so dass die Befestigungseinrichtung 62 flexibel für unterschiedliche Fahrzeugkarosserietypen genutzt werden kann. Die Befestigungseinrichtung 62 nimmt eine Fahrzeugkarosserie 14 somit unmittelbar auf, ohne dass die Fahrzeugkarosserie 10 auf einem Werkstückträger, wie beispielsweise einem an und für sich bekannten Skid, befestigt ist.

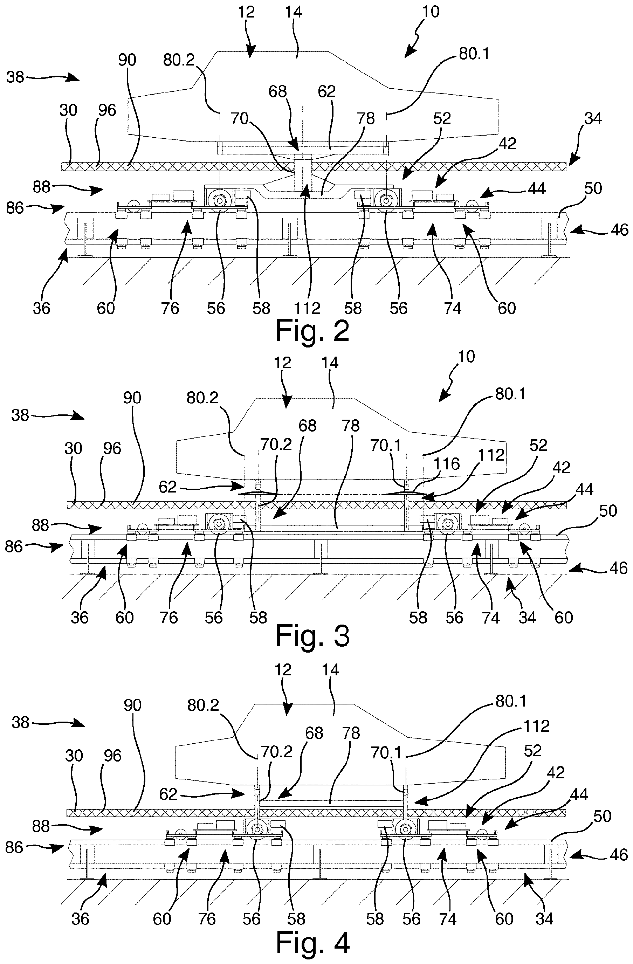

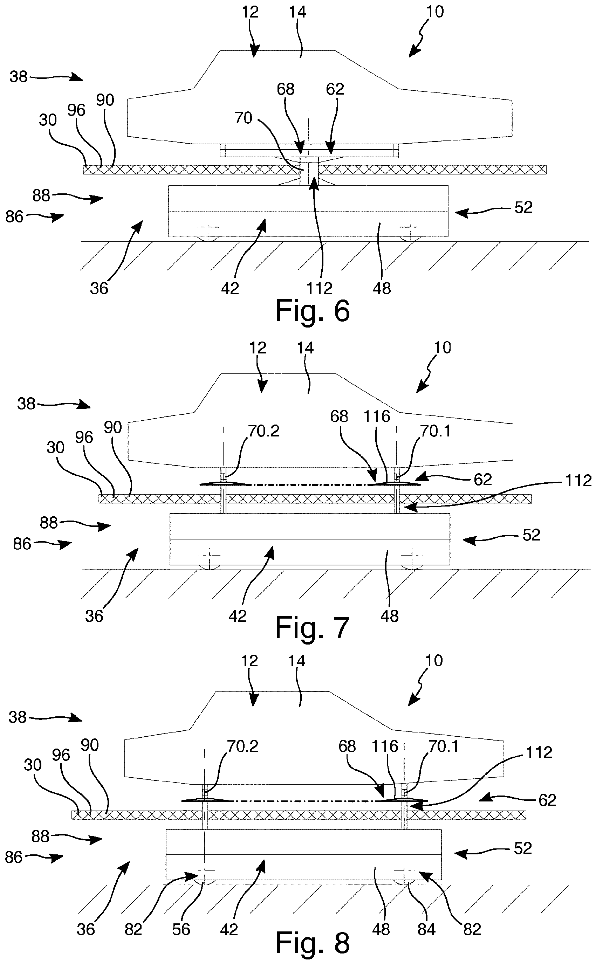

Das Fahrwerk 52 des Transportwagens 42 ist mittels einer Verbindungseinrichtung 68 mit der Befestigungseinrichtung 62 gekoppelt. Die Verbindungseinrichtung 68 umfasst wenigstens eine nach oben weisende Strebe 70. Eine Verbindungseinrichtung 68 mit einer einzigen solchen Strebe 70 ist jeweils bei dem Schienenwagen 44 nach Figur 2 und dem FTS-Wagen 48 nach Figur 6 gezeigt. Bei den Ausführungsbeispielen des Schienenwagens 44 gemäß den Figuren 3 und 4 sowie des FTS-Wagens 48 gemäß den Figuren 7 und 8 umfasst die Verbindungseinrichtung 68 jeweils zwei Streben 70.1 und 70.2, wodurch die Stabilität erhöht ist. Jede vorhandene Strebe 70 koppelt das Fahrwerk 52 des Transportwagens 42 mit der Befestigungseinrichtung 62. Es können aber sowohl bei dem Schienenwagen 44 als auch bei dem FTS-Wagen 48 mehr als zwei Streben 70 vorhanden sein.

Jede Strebe 70 hat beim vorliegenden Ausführungsbeispiel einen unteren vertikalen Abschnitt 72a, einen C-förmigen Mittelabschnitt 72b und einen oberen, wieder vertikalen Abschnitt 72c, wobei der untere Abschnitt 72a mit dem Fahrwerk 40 des Transportwagens 34 und der obere Abschnitt 72c mit der Befestigungseinrichtung 62 verbunden ist. Bei den vorliegenden Ausführungsbeispielen verlaufen die oben und unteren Abschnitte 72a und 72c vertikal und koaxial zueinander.

Bei nicht eigens gezeigten Abwandlungen sind auch andere Geometrien der Streben 70 möglich, insbesondere kann eine Strebe 70 auch als reine Vertikalstrebe ausgebildet sein oder ein Mittelabschnitt gegenüber einer vertikalen, zur Transportrichtung parallelen Ebene von unten nach oben geneigt, aber ansonsten geradlinig sein.

Der Transportwagen 42 ist derart ausgebildet, dass er in der Lage ist, die Kurvenabschnitte 40 der Förderstrecke 36 zu durchfahren. Hierfür kann das Fahrwerk 52 des Schienenwagens 44 insbesondere mit einer Vorläufereinheit 74 und einer Nachläufereinheit 76 konzipiert sein, die gelenkig miteinander verbunden sind. Bei den hier gezeigten Ausführungsbeispielen lagern sowohl die Vorläufereinheit 74 als auch die Nachläufereinheit 76 jeweils eine Antriebsrolle 56 mit zugehörigem Antriebsmotor 58. Es kann jedoch auch nur eine Antriebsrolle 56 mit Antriebsmotor 58 vorgesehen sein. Die dann nicht mit einer Antriebsrolle 56 ausgestattete Vor- oder Nachläufereinheit 74, 76 weist dann einen mitlaufende Tragrolle ohne eigenen Antrieb auf.

Für Kurvenfahrten kann das Fahrwerk 52 außerdem eine Fahrwerk-Verbindungsstruktur 78 umfassen, die an zwei in Transportrichtung gegenüberliegenden Bereichen um eine erste bzw. zweite jeweils vertikale Gelenkachse 80.1 bzw. 80.2 gelenkig mit der Vorläufereinheit 74 bzw. der Nachläufereinheit 76 verbunden ist und die Verbindungseinrichtung 68, d.h. hier die eine Strebe 70 oder die beiden Streben 70.1 oder 70.2, mit sich führt.

Bei den Schienenwagen 44 gemäß den Figuren 2 und 4 kreuzen die Gelenkachsen 80.1, 80.2 der Fahrwerk-Verbindungsstruktur 78 jeweils die horizontale Drehachse der vorhandenen Antriebsrolle 56 - oder der gegebenenfalls mitlaufenden Tragrolle ohne eigenen Antrieb - der Vorläufereinheit 74 bzw. der Nachläufereinheit 76. Bei dem Schienenwagen 44 gemäß Figur 3 sind in Transportrichtung betrachtet die Gelenkachsen 80.1 und 80.2 dagegen unter Einhaltung eines Abstandes zwischen den Antriebsrollen 56 der Vorläufereinheit 74 und der Nachläufereinheit 76 angeordnet.

Das Antriebssystem 54 eines FTS-Wagens 48 ist omnidirektional und umfasst hierzu an sich bekannte Fahr-Dreh-Module 82, von denen mindestens eines eine angetriebene Antriebsrolle 56 umfasst. Alternativ können auch beispielsweise Allseitenräder oder Mecanum-Räder vorhanden sein, wie dies an sich im Stand der Technik bekannt ist.

Bei den vorliegenden Ausführungsbeispielen sind vier Fahr-Dreh-Module 82 vorgesehen, jeweils eines vorne links und rechts und hinten links und rechts, wobei zwei Antriebsrollen 56 diagonal, d.h. vorne links und hinten rechts oder vorne rechts und hinten links, vorgesehen sind. Die beiden anderen Fahr-Dreh-Module 82 lagern eine passive Laufrolle 84. Es können aber auch vier angetriebene Antriebsrollen 56 vorgesehen sein.

Bei dem FTS-Wagen 44 gemäß Figur 6 ist die dort einzige nach oben weisende Strebe 70 bezogen auf die vier vorhandenen Fahr-Dreh-Module 82 zentriert angeordnet. Bei dem FTS-Wagen 44 gemäß Figur 7 sind die beiden dort vorhandenen Streben 70.1, 70.2 in Transportrichtung gesehen unter Einhaltung eines Abstandes zwischen den beiden vorderen Fahr-Dreh-Modulen 82 und den beiden hinteren Fahr-Dreh-Modulen 82 angeordnet. Bei dem FTS-Wagen 44 gemäß Figur 8 verläuft die Strebe 70.1 vertikal oberhalb und über der vorderen Antriebsrolle 56 und der vorderen passiven Laufrolle 84, wogegen die Strebe 70.2 vertikal oberhalb und über der hinteren Antriebsrolle 56 und der hinteren passiven Laufrolle 84 verläuft.

Die Behandlungseinrichtung 16 und das Fördersystem 34 sind so aufeinander abgestimmt, dass sich nur ein Teil des Fördersystems 34 in dem Förderraum 36 bewegt, während der andere Teil des Fördersystems 34 außerhalb des Förderraumes 38 bewegt wird.

Hierfür ist außerhalb des Förderraum 38 ein Führungsbereich 86 mit einem ebenfalls außerhalb des Förderraumes 38 angeordneten Fahrraum 88 vorgesehen, in welchem sich das Fahrwerk 52 eines jeweiligen Transportwagens 42 bewegt, wobei der Förderraum 38 und der Führungsbereich 86 bzw. der Fahrraum 88 nach oben durch eine Trennwand 90 getrennt sind. Beim vorliegenden Ausführungsbeispiel ist diese Trennwand 90 ein Abschnitt 92 des Bodens 30, wobei der Führungsbereich 86 mit dem Fahrraum 88 unterhalb des Bodens 30 angeordnet ist. Im Falle des Fördersystems 34 mit den Schienenwagen 44 ist in dem Fahrraum 88 außerdem das Schienensystem 46 untergebracht.

Eine Anordnung des Führungsbereichs 86 bzw. des Fahrraums 88 "außerhalb" des Förderraumes 38 ist so zu verstehen, dass es eine strukturelle Trennung zwischen dem Förderraum 38 und dem Führungsbereich 86 und dem Fahrraum 88 durch die angesprochene Trennwand 90 gibt. Dies bedeutet jedoch nicht, dass der Führungsbereich 86 und gegebenenfalls der Fahrraum 88 nicht zumindest bereichsweise in den Förderraum 38 hineinragen können und im Querschnitt mit dem Behandlungsraum 20 überlappen können.

Der Fahrraum 88 kann zur Umgebung der Behandlungseinrichtung 16 oder der übrigen Förderstrecke 36 hin offen sein; jedenfalls muss kein eigenes Gehäuse für den Fahrraum 88 vorhanden sein. Beim vorliegenden Ausführungsbeispiel ist der Fahrraum 88 jedoch durch ein eigenes Fahrraumgehäuse 94 begrenzt, welches die Trennwand 90 umfasst. Anders ausgedrückt ist also beim vorliegenden Ausführungsbeispiel der Abschnitt 92 des Bodens 30 ein Teil des Fahrraumgehäuses 94. Alternativ können sich bei der Behandlungseinrichtung 16 auch die Seitenwände 26 des Gehäuses 18 nach unten über den Boden 30 hinaus erstrecken, so dass sie dort den Fahrraum 88 seitlich begrenzen; in diesem Fall ist dieser Fahrraum 88 dann nach oben durch den gesamten Boden 30 von dem Behandlungsraum 20 getrennt.

Der Fahrraum 88 ist nun über einen Verbindungsdurchgang 96 in der Trennwand 90 mit dem Förderraum 38 verbunden. Der Verbindungsdurchgang 96 ist komplementär zu der Verbindungseinrichtung 68 der Transportwagen 42.

Die Verbindungseinrichtung 68 erstreckt sich durch den Verbindungsdurchgang 96 hindurch, so dass sich die Befestigungseinrichtung 62 mit dem Werkstück 12 in dem Förderraum 38 - und damit in der Behandlungseinrichtung 16 in dem Behandlungsraum 20 - und sich das Fahrwerk 52 eines Transportwagens 42 in dem Fahrraum 88 befinden.

Beim vorliegenden Ausführungsbeispiel ist der Verbindungsdurchgang 96 folglich derart gewinkelt und im Querschnitt labyrinthartig ausgebildet, dass der Verbindungsdurchgang 96 insgesamt komplementär zu den Streben 70 mit dem C-förmigen mittleren Abschnitt 72b ist. Bei anders ausgebildeten Streben 70 ist der Verbindungsdurchgang 96 entsprechend an der Verlauf solcher Streben 70 angepasst.

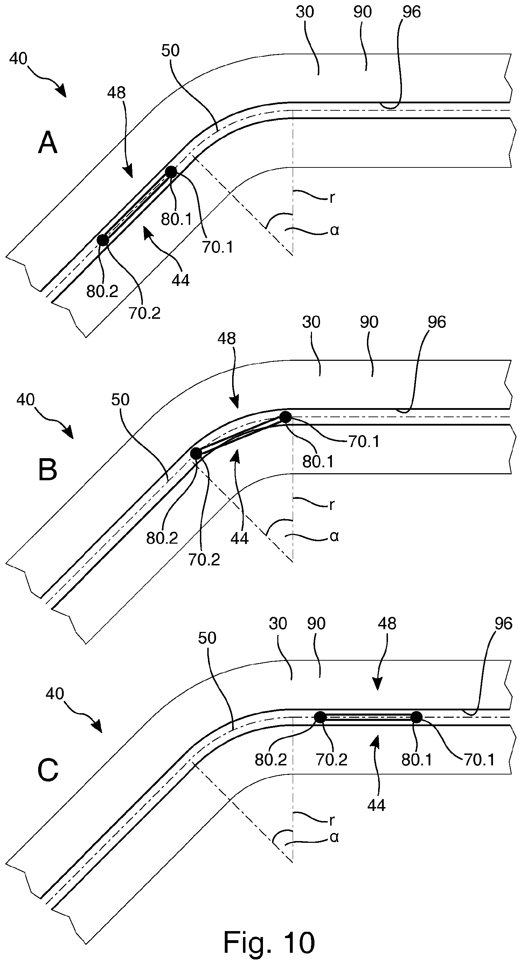

Die Figuren 9 und 10 veranschaulichen grundsätzlich eine Kurvenfahrt der Transportwagen 42 und zeigen den Kurvenabschnitt 40 in einer Draufsicht von oben, wobei der Boden 30 und der Verbindungsdurchgang 96 zu erkennen sind. Der Kurvenabschnitt 40 ist als Kurve mir einem Winkel α von 45° veranschaulicht, kann jedoch auch alle anderen Kurvenwinkel haben. Ein Kurvenradius r des Kurvenabschnitts 40 kann im Grunde genommen beliebig sein, ergibt sich in der Praxis durch das Fördersystem 34 bzw. die Fähigkeit der Transportwagen 42, welche Kurvenradien durchfahren werden können. In Kurvenabschnitten 40 hat der Verbindungsdurchgang 96 in Transportrichtung betrachtet einen gekrümmten Verlauf, der jedoch nicht immer mit der Kurvenverlauf für den Transportwagen 42 übereinstimmen muss; dies wird weiter unten deutlich.

Figur 9 zeigt schematisch die Kurvensituation bezogen auf die Schienenwagen 44 gemäß den Figuren 2 und 3, wobei der Verlauf der Tragschiene 50 strichpunktiert angedeutet ist. Figur 9 zeigt drei Positionen A, B und C bei der Kurvenfahrt der Schienenwagen 44.

Für den Schienenwagen 44 gemäß Figur 2 sind die beiden weißen Kreise und der Kreis mit dem Punkt in der Mitte relevant. Die weißen Kreise entsprechen dabei der Position der vertikalen Gelenkachsen 80.1 und 80.2 der Fahrwerk-Verbindungsstruktur 78, wogegen der Kreis mit dem Punkt in der Mitte die einzelne Strebe 70 wiederspiegelt, die von der Fahrwerk-Verbindungsstruktur 78 getragen ist.

Für den Schienenwagen 44 gemäß Figur 3 sind die weißen und die schwarzen Kreise relevant, wobei die weißen Kreise wieder der Position der vertikalen Gelenkachsen 80.1 und 80.2 für die Fahrwerk-Verbindungsstruktur 78 des Schienenwagens 44 entsprechen. Die schwarzen Kreise veranschaulichen die Position der Streben 70.1 und 70.2 der Verbindungseinrichtung 68 des Schienenwagens 44 gemäß Figur 3.

Aufgrund der Konfigurationen der Schienenwagen 44 gemäß den Figuren 2 und 3, bei denen die vertikalen Gelenkachsen 80.1, 80.2 nicht mit der Strebe 70 bzw. den Streben 70.1, 70.2 überlappen, verlaufen die Strebe 70 bzw. die Streben 70.1, 70.2 bei einer Kurvenfahrt nicht vertikal über der Tragschiene 50, sondern versetzt dazu. Dementsprechend sind der Kurvenverlauf der Tragschiene 50 und der Kurvenverlauf des Verbindungsdurchgangs 96 an diesen Versatz angepasst.

Bei der einzelnen Strebe 70 des Schienenwagens 44 gemäß Figur 2 kann dabei die Breite des Verbindungsdurchgangs 96 grundsätzlich konstant bleiben, was in Figur 9 nicht eigens gezeigt ist. Vielmehr veranschaulicht Figur 9 die Besonderheit bei dem Schienenwagen 44 gemäß Figur 3, bei dem die Streben 70.1 und 70.2 bei der Kurvenfahrt einer jeweiligen Bewegungsbahn folgen, die auch eine Komponente quer zum Kurvenverlauf hat, so dass der Verbindungsdurchgang 96 dort verbreitert sein muss. Diese Bewegungsbahnen der Streben 70.1 und 70.2 sind in Figur 9 bei B und C mit 98.1 bzw. 98.2 bezeichnet. Ohne die Verbreiterung des Verbindungsdurchgangs 96 in dem Kurvenabschnitt 40 würden die Streben 70.1 und 70.2 mit den Seiten des Verbindungsdurchgangs 96 kollidieren, wodurch eine Weiterfahrt des Schienenwagens 44 blockiert würde.

Andere Situationen ergeben sich für die Konfigurationen des Schienenwagens 44 gemäß Figur 4 bzw. der FTS-Wagen 48 gemäß den Figuren 7 und 8, die in Figur 10 veranschaulicht sind, welche wieder drei Situationen A, B und C der Kurvenfahrt für den Schienenwagen 44 bzw. die FTS-Wagen 48 zeigt.

Bezogen auf den Schienenwagen 44 gemäß Figur 4 entsprechen die schwarzen Kreise in Figur 10 den Gelenkachsen 80.1, 80.2 und veranschaulichen zugleich die Position der Streben 70.1 und 70.2. Da die Gelenkachsen 80.1 und 80.2 die horizontalen Drehachsen der Antriebsrollen 56 kreuzen, ist es möglich, dass der Verlauf der Tragschiene 50 und der Verlauf der Durchgangsverbindung 96 in der gezeigten Draufsicht parallel sind, ohne dass die Durchgangsverbindung 96 verbreitert werden muss.

Bezogen auf die FTS-Wagen 48 gemäß den Figuren 7 und 8 entsprechen die schwarzen Kreise in Figur 10 den jeweiligen Streben 70.1 und 70.2. Da die FTS-Wagen 48 omnidirektional sind, können die FTS-Wagen 48 so in dem Fahrraum 88 bewegt werden, dass die Streben 70.1 und 70.2 ohne Kollisionsgefahr dem Verbindungsdurchgang 96 folgen. Auch hier ist keine Verbreiterung des Verbindungsdurchganges 96 nötig.

Der in Figur 6 gezeigte FTS-Wagen 48 ist weder in Figur 9 noch in Figur 10 illustriert. Durch die omnidirektionale Bewegungsmöglichkeit des FTS-Wagens 48 in Verbindung mit der nur einen Strebe 70 kann dieser FTS-Wagen 48 entlang des Verbindungsdurchgangs 96 durch den Kurvenabschnitt 40 bewegt werden, ohne dass eine Verbreiterung des Verbindungsdurchgangs 96 erforderlich ist.

Entlang der Förderstrecke 36 gibt es die eingangs erläuterte Anforderung, dass möglichst weitgehend verhindert werden sollte, dass gegebenenfalls von den Werkstücken 12 herabfallende oder herabtropfende Materialien oder Medien durch den Verbindungsdurchgang 96 hindurch in den Fahrraum 88 und auf die dort befindliche Fördertechnik, insbesondere auf die Transportwagen 42, gelangen. Diese Anforderung besteht unabhängig von der konkreten Ausbildung der Transportwagen 42 und unabhängig davon, ob der Verbindungsdurchgang 96 im Kurvenabschnitt 40 verbreitert sein muss oder nicht.

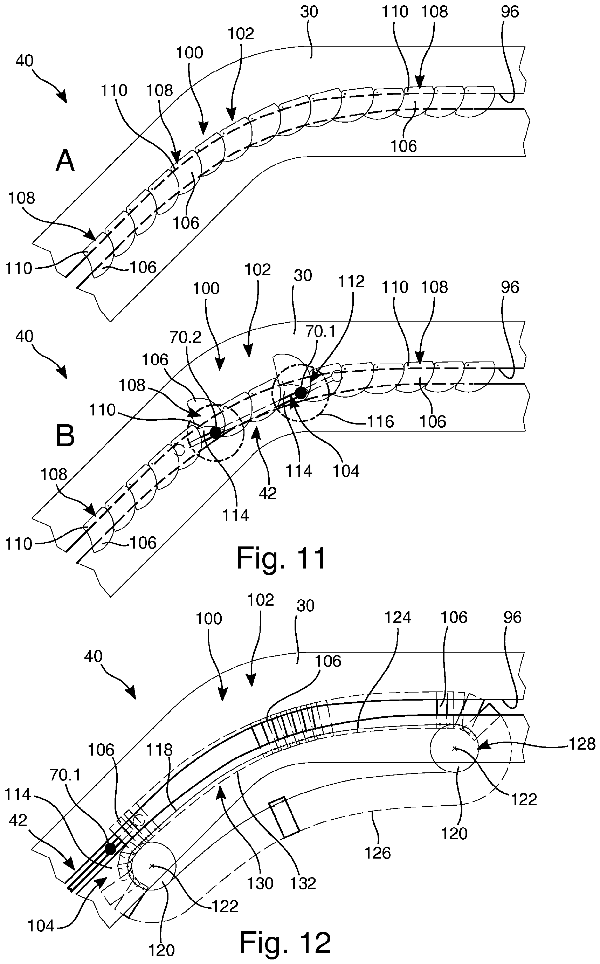

Um den erforderlichen Schutz auch in Kurvenabschnitten 40 sicherzustellen, umfasst die Behandlungsanlage 10 ein Abschirmsystem 100 zur Abschirmung des Verbindungsdurchgangs 96 in einem Kurvenabschnitt 40 der Förderstrecke 36, von dem nachfolgend mehrere Ausführungsbeispiele anhand der Figuren 11 bis 16 erläutert werden.

Das Abschirmsystem 100 umfasst eine Abschirmeinrichtung 102, welche den Verbindungsdurchgang 96 in dem Kurvenabschnitt 40 abgesehen von einer beweglichen Durchgangsfensteranordnung 104 für die Verbindungseinrichtung 68 des Transportwagens 42 abdeckt.

Bei dem in Figur 11 gezeigten Ausführungsbeispiel des Abschirmsystems 100 umfasst die Abschirmeinrichtung 102 eine Vielzahl von weitgehend starren Abschirmelementen 106. Die Abschirmelemente 106 sind dem Verlauf des Verbindungsdurchgangs 96 folgend aneinander angrenzend angeordnet, können bei einer nicht eigens gezeigten Abwandlung jedoch auch in dieser Richtung bereichsweise, beispielsweise schindelartig, überlappen. Jedes Abschirmelement 106 ist zwischen einer Abschirmstellung, in welcher es den Verbindungsdurchgang 96 abdeckt, und einer Freigabestellung, in welcher es von der Verbindungseinrichtung des Transportwagens 42 passiert werden kann, beweglich. Hierfür ist jedes Abschirmelement 106 mittels einer Lagereinrichtung 108 um eine jeweilige Schwenkachse 110 verschwenkbar gelagert. Bei dem hier gezeigten Ausführungsbeispiel verlaufen die Schwenkachsen 110 vertikal. Es sind nur einige Abschirmelemente 106, Lagereinrichtung 108 und Schwenkachsen 110 mit Bezugszeichen versehen. Die Abschirmelemente 106 sind in der Praxis vorzugsweise plattenförmig.

Beim vorliegenden Ausführungsbeispiel ist der Verbindungsdurchgang 96 nur auf einer Seite von den Lagereinrichtungen 108 flankiert. Bei einer nicht eigens gezeigten Abwandlung können auch auf beiden Seiten des Verbindungsdurchgangs 96 Lagereinrichtungen 108 vorhanden sein, insbesondere alternierend, so dass sich die Abschirmelemente 106 aufeinanderfolgend abwechselnd nach links und rechts in die Freigabestellung verschwenken lassen. Die Abschirmelemente 106 haben in Transportrichtung der Transportwagen 42 zueinander komplementär gekrümmte Vorder- und Hinterkonturen, die es erlauben, dass zwei benachbarte Abschirmelemente 106 weitgehend fugenlos aneinander anliegen, ohne dass eine Schwenkbewegung eines Abschirmelements 106 gestört wird; dies veranschaulicht Figur 11.

Mittels der jeweiligen Lagereinrichtung 108 sind die Abschirmelemente 108 unter Federvorspannung in Richtung auf die Abschirmstellung vorgespannt, so dass die Abschirmelemente 108 ohne äußere Krafteinwirkung ihre Abschirmstellung einnehmen.

Die Transportwagen 42 führen eine Verstelleinrichtung 112 mit sich, mittels welcher die Abschirmeinrichtung 102 betätigt wird. Bei allen vorliegenden Ausführungsbeispielen ist die Verstelleinrichtung durch die Strebe 70 oder durch die Streben 70.1, 70.2 ausgebildet; es kann jedoch auch eine gesonderte Verstelleinrichtung 112 vorgesehen sein.

Wenn nun ein Transportwagen 42 auf der Förderstrecke 36 zu der Abschirmeinrichtung 102 im Kurvenabschnitt 40 gelangt und sich weiter in Transportrichtung bewegt, werden die Abschirmelemente 106 durch die Verstelleinrichtung 112, d.h. hier durch die Streben 70, aus ihrer Abschirmstellung in die Freigabestellung gedrückt. Dabei entsteht jeweils eine Durchgangsfenster 114, durch welches sich die jeweilige Strebe 70 durch den Verbindungsdurchgang 96 hindurch erstreckt und so das verschwenkte Abschirmelement 106 in Transportrichtung passiert.

Figur 11B zeigt dies am Beispiel des Schienenwagens 44 im Bereich der beiden Streben 70.1, 70.2, bei dem die Durchgangsfensteranordnung 104 folglich zwei sich bewegende Durchgangsfenster 114 umfasst.

Bei der weiteren Bewegung des Transportwagen 42 wird die jeweilige Strebe 70 an dem Abschirmelement 106 vorbeibewegt, welches durch die Federvorspannung wieder in die Abschirmstellung bewegt wird, wenn die Strebe 70 vollständig an dem Abschirmelement 106 vorbeigefahren ist.

Bei nicht eigens gezeigten Abwandlungen können die Abschirmelemente 106 auch flexibel sein, d.h. insbesondere biegbar sein, solange hierbei eine erforderliche Stabilität und Festigkeit in der Abschirmstellung sichergestellt ist, die einen sicheren Schmutzschutz für den Verbindungsdurchgang 96 gewährleistet. Solche flexiblen Abschirmelemente können ebenfalls mittels der Lagereinrichtungen 108 verschwenkbar gelagert sein, können jedoch auch an einem Befestigungsende unbeweglich, d.h. nicht schwenkbar, befestigt sein.

Insbesondere kann dann aber auf eine verschwenkbare Lagerung durch die Lagereinrichtungen 108 verzichtet werden. Bei der Bewegung des Transportwagens 42 drückt dessen Verstelleinrichtung 112 solche flexiblen und biegbaren Abschirmelemente 106 gleichsam aus dem Weg und zur Seite in die Freigabestellung. Wenn die Abschirmelemente 106 keinem Widerstand mehr durch die Verstelleinrichtung 112 ausgesetzt sind, schnappen diese auf Grund einer Materialvorspannung wieder in die Abschirmstellung zurück.

Damit auch die Durchgangsfensteranordnung 104 bzw. die entstehenden Durchgangsfenster 114 gegen von den Werkstücken 12 herabfallendes oder herabtropfendes Material oder Medien geschützt sind, führen die Transportwagen 42 eine oder mehrere Abdeckungen 116 mit sich, welche so angeordnet sind, dass sie sich im Förderraum 38 oberhalb von der Durchgangsfensteranordnung 104 oder sich öffnenden Durchgangsfenstern 114 befinden. Bei den hier gezeigten Transportwagen 42 sind die Abdeckungen 116 als Kragen 118 an den Streben 70 ausgebildet, die exemplarisch in den Figuren 1, 2, 7, 8, 11, 14 und 16 veranschaulicht sind.

Wie in den Figuren 3, 7 und 8 noch ergänzend durch gestrichelte Linien angedeutet ist, kann anstelle von jeweils einer Abdeckung 116 an jeder Strebe 70.1, 70.2 auch eine Abdeckung 116 vorhanden sein, welche sich in dem Förderraum 38 von einer Strebe 70.1 zu anderen Strebe 70.2 erstreckt und in und entgegen der Transportrichtung über die Streben 70.1, 70.2 übersteht.

Bei dem in Figur 12 gezeigten Ausführungsbeispiel des Abschirmsystems 100 sind Abschirmelemente 106 an einem Endlosband 118 angebracht, welches um wenigstens zwei Umlaufrollen 120 umläuft, welche jeweils um eine vertikale Drehachse 122 verdrehbar sind. Auf diese Weise ist auf der Seite der Umlaufrollen 120, die zu dem Verbindungsdurchgang 96 weist, ein Abschirmtrum 124 und auf der Seite der Rollen 120, die von dem Verbindungdurchgang 96 weg weist, ein Rückführtrum 126 des Endlosbandes 118 gebildet. Eine der beiden Umlaufrollen 120 ist mittels eines Motors 128 angetrieben.

Beim hier gezeigten Ausführungsbeispiel sind die Abschirmelemente 106 schindelartig überlappend an dem Endlosband 118 befestigt, es können aber auch andere Konfigurationen umgesetzt werden.

Außerdem ist entlang des Verbindungsdurchgangs 96 eine Führungsstruktur 130 für das Endlosband 118 angeordnet, welche derart eingerichtet ist, dass das Abschirmtrum 124 des Endlosbandes 118 dem gekrümmten Verlauf des Verbindungsdurchgangs 96 im Kurvenabschnitt 40 folgt, so dass die Abschirmelemente 106 sich beim Umlauf des Endlosbandes 118 im Bereich des Abschirmtrums 124 horizontal über den Verbindungsdurchgang 96 hinweg erstrecken. Hierzu sind die Abschirmelemente 106 auch entsprechend lang in Richtung nach radial außen ausgebildet.

Beispielsweise kann die Führungsstruktur 130 ein Führungsblech 132 sein, an dem das Abschirmtrum124 des Endlosbandes 118 abläuft. Bei einer nicht eigens gezeigten Abwandlung können auch eine oder mehrere weitere Rollen zwischen den beiden Umlaufrollen 120 angeordnet sein.

Die Führungsstruktur 130 kann auch das Rückführtrum 126 führen, ohne dass es hier auf eine exakte Wegführung, wie es für das Abschirmtrum 124 nötig ist, ankommt.

In einem Abschnitt des Endlosbandes 118 gibt es keine oder verkürzte Abschirmelemente 106, so dass dort ein Durchgangsfenster 114 der Durchgangsfensteranordnung 104 ist.

Wenn nun ein Transportwagen 42 in den Kurvenabschnitt 40 einfährt und zur Abschirmeinrichtung 102 gelangt, ist das Endlosband 118 zunächst so positioniert, dass die Strebe 70, oder bei zwei Streben 70.1, 70.2 oder mehr die vorauseilende Strebe 70, in das Durchgangsfenster 114 einfahren kann. Bei der weiteren Bewegung des Transportwagens 42 in Transportrichtung wird der Umlauf des Endlosbandes 118 aktiviert und der Motor 128 derart angesteuert, dass sich das Durchgangsfenster 114 mit der Strebe 70 synchronisiert mitbewegt.

Wenn Transportwagen 42 verwendet werden, deren Verbindungseinrichtung mehrere Streben 70 aufweist, sind entsprechende mehrere Durchgangsfenster 114 vorhanden, deren Position am Endlosband 118 an den Abstand der Streben 70 angepasst ist.

Gegebenenfalls kann das Endlosband 118 auch passiv durch die Streben 70 angetrieben werden, indem eine Strebe 70 an ein Abschirmelement 106 anstößt, welches dem Durchgangsfenster 114 in Transportrichtung vorauseilt. Hierzu muss dieses Abschirmelement 106 ausreichend stabil sein.

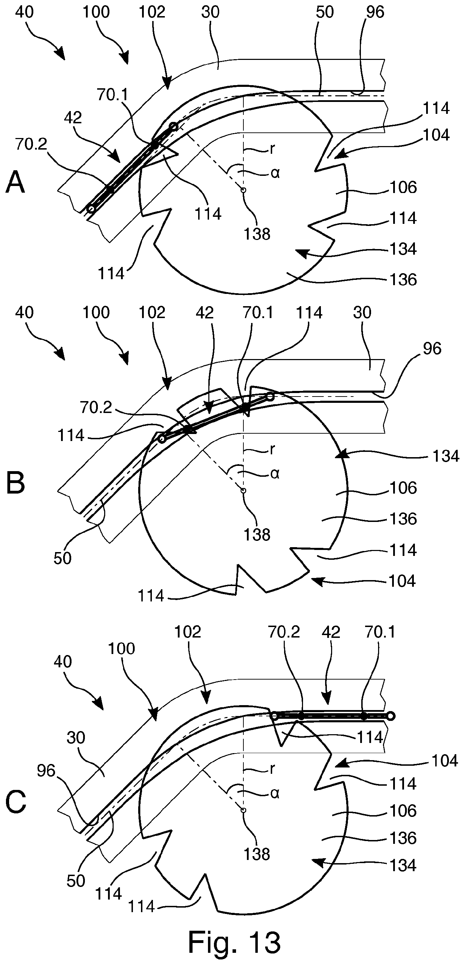

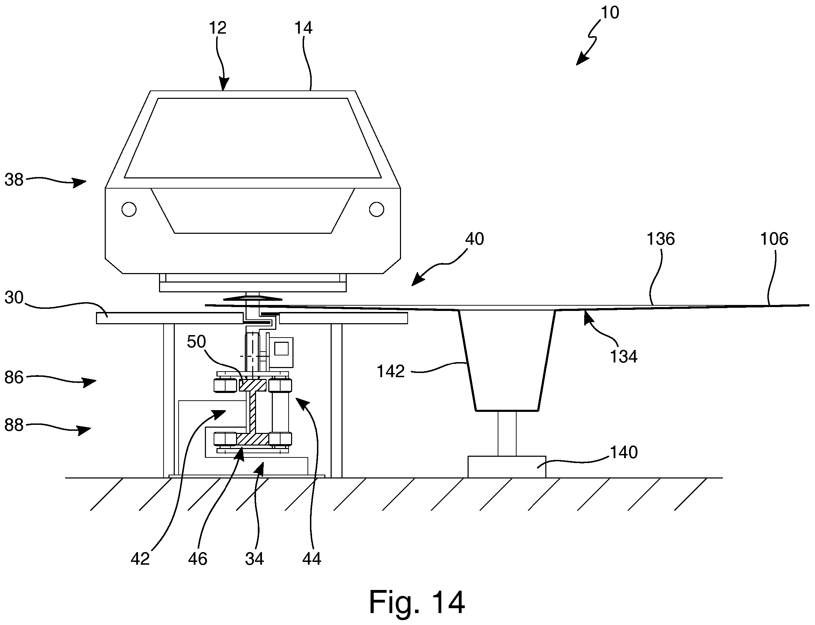

Bei dem Ausführungsbeispiel des Abschirmsystems 100 gemäß den Figuren 13 und 14 umfasst die Abschirmeinrichtung 102 lediglich ein einziges Abschirmelement 106 in Form eines Drehelements 134, welches einen Abschirmring 136 mit einem Außenradius Rₐ definiert, der größer ist als der Radius r des Kurvenabschnitts 40. Der Abschirmring 136 ist horizontal ausgerichtet und das Drehelement 134 ist um eine vertikale Drehachse 138 drehbar gelagert, die den Mittelpunkt des Abschirmrings 136 definiert. Die Außenkontur des Drehelements 134 muss dabei nicht ringförmig sein.

Das Drehelement 134 ist so angeordnet und bemessen, dass sich stets ein Abschnitt 140 der Abschirm-Ringfläche 136 vertikal über dem Verbindungsdurchgang 96 befindet. In der Praxis sind der Mittelpunkt der Kurve bezogen auf den Kurvenradius r und die Drehachse 138 des Drehelements 134 koaxial angeordnet.

Einzelne Durchgangsfenster 114 der Durchgangsfensteranordnung 104 sind bei dem Drehelement 134 durch radial außen im Abschirmring 136 vorgesehene Materialaussparungen ausgebildet, die in Ihrer Dimension, Abmessung und in Ihren Abständen zueinander an die Streben 70 und deren Abstand angepasst sind. Das Drehelement 134 ist durch einen Motor 140 antreibbar, der in Figur 14 gezeigt ist.

Wenn nun ein Transportwagen 42 in den Kurvenabschnitt 40 einfährt und zur Abschirmeinrichtung 102 mit dem Drehelement 134 gelangt, ist das Drehelement 134 zunächst so positioniert, dass die Strebe 70, oder bei zwei Streben 70.1, 70.2 oder mehr die vorauseilende Strebe 70, in ein Durchgangsfenster 114 einfahren kann; dies zeigt die Position A in Figur 13. Bei der weiteren Bewegung des Transportwagens 42 in Transportrichtung wird die Drehung des Drehelements 134 aktiviert und der Motor 140 derart angesteuert, dass sich die Durchgangsfenster 114 mit den Streben 70 synchronisiert mitbewegen, bis der Transportwagen 42 den Bereich des Drehelements 134 wieder verlässt, wie es die Positionen B und C in Figur 13 darstellen.

Wie Figur 14 veranschaulicht, ist der Abschirmring 136 als flacher Konus ausgebildet, der mittig in einen Auffangbehälter 142 mündet bzw. übergeht. Auf diese Weise kann Material oder Medium, welches von den Werkstücken 12 auf das Drehelement 134 herabfällt oder -tropft, auf dem Abschirmring 136 zu dem Auffangbehälter 142 rieseln oder fließen und dort gesammelt werden. Insgesamt ist das Drehelement 134 somit als eine Art Sammeltrichter ausgebildet. Bezogen auf den Konus bedeutet die oben angesprochene horizontale Ausrichtung des Abschirmringes 136, dass die Konusachse vertikal verläuft.

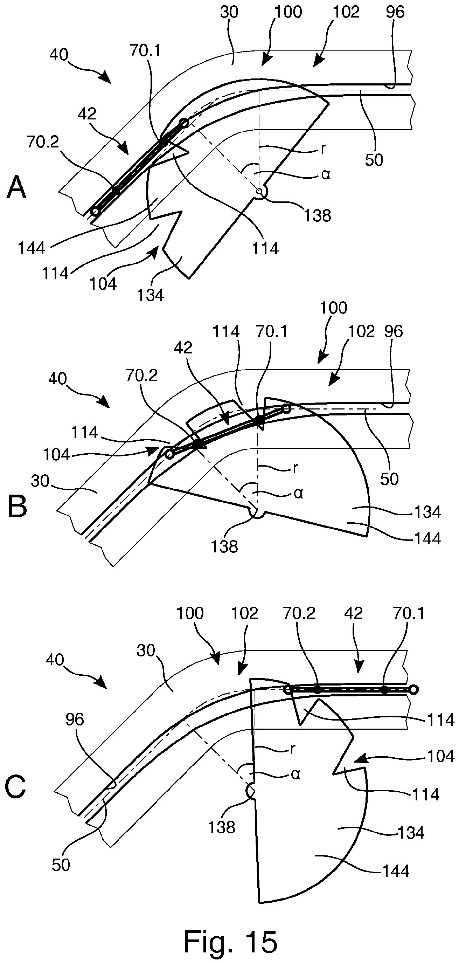

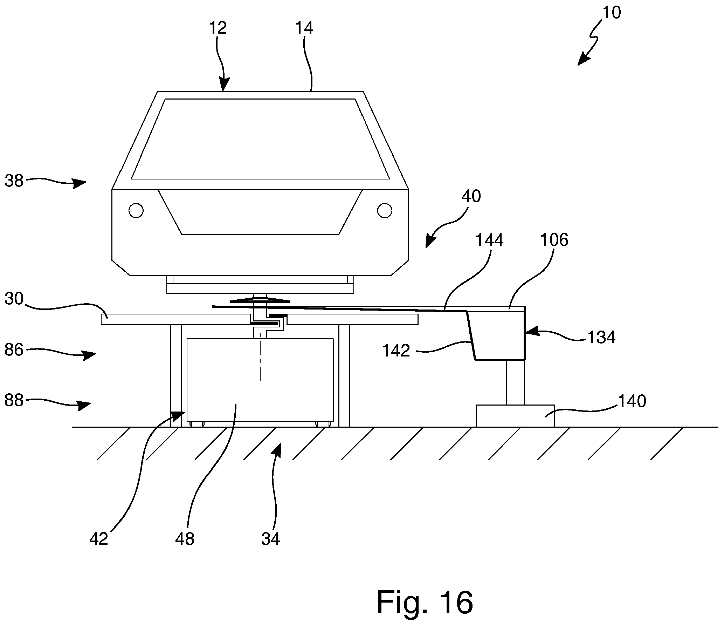

Bei dem abgewandelten Ausführungsbeispiel des Abschirmsystems 100 gemäß den Figuren 15 und 16 definiert das Drehelement 134 lediglich ein Abschirm-Ringsegment 144 mit einem Außenradius Rₐ und entsprechend vorhandenen Durchgangsfenstern 114, die durch Materialaussparungen erzeugt sind. Wie Figur 16 zeigt, ist auch das Abschirm-Ringsegment 142 flach konisch ausgebildet und mündet mittig in den Auffangbehälter 142. Ansonsten gilt das zu dem Drehelement 134 mit dem Abschirmring 136 Gesagte sinngemäß entsprechend. Die Figur 15 zeigt dementsprechend Positionen A, B und C, die den Positionen A, B und C in Figur 13 für das Drehelement 134 mit dem Abschirmring 136 entsprechen.

Bei allen beschriebenen Ausführungsbeispielen sind die Abschirmelemente 106 oberhalb des Verbindungsdurchgangs 96 und in dem Förderraum 38 angeordnet. Bei nicht eigens gezeigten Abwandlungen können die Abschirmelemente 106 jedoch auch insgesamt oder mit einer Teilanzahl unterhalb des Verbindungsdurchgangs 96 und somit in dem Führungsbereich 86 mit dem Fahrraum 88 angeordnet sein. Bei einer weiteren, ebenfalls nicht gezeigten Abwandlung können die Abscheideelemente 106 auch insgesamt oder mit einer Teilanzahl auf einen Höhenniveau im Bereich der Seitenwände der Durchgangsverbindung 96 angeordnet sein, d.h. in einem Bereich zwischen dem Führungsbereich 86 mit dem Fahrraum 88 und dem Förderraum 88.

## Patentansprüche

1. Behandlungsanlage zum Behandeln von Werkstücken (12), insbesondere zum Behandeln von Fahrzeugkarosserien (14), mit
a) einem Fördersystem (34), welches eine Vielzahl von Transportwagen (42) umfasst, mittels denen die Werkstücke (12) auf einer Förderstrecke (36) förderbar sind, die einen oder mehrere Kurvenabschnitte (40) umfasst, wobei jeder Transportwagen (42) ein Fahrwerk (52) und eine Befestigungseinrichtung (62) für zumindest ein Werkstück (12) umfasst, die mittels einer Verbindungseinrichtung (68) miteinander gekoppelt sind;
wobei
b) entlang der Förderstrecke (36) ein Fahrraum (88) für das Fahrwerk (52) vorhanden ist, der durch einen Verbindungsdurchgang (96) in Richtung nach oben mit einem Förderraum (38) verbunden ist, derart, dass das Fahrwerk (52) in dem Fahrraum (88) bewegbar ist und die Befestigungseinrichtung (62) in dem Förderraum (38) mitgeführt wird, wobei sich die Verbindungseinrichtung (68) durch den Verbindungsdurchgang (96) hindurch erstreckt und wobei der Verbindungsdurchgang (96) in dem Kurvenabschnitt (40) einen gekrümmten Verlauf hat;
c) ein Abschirmsystem (100) mit einer Abschirmeinrichtung (102) vorgesehen ist, welche den Verbindungsdurchgang (96) in einem Kurvenabschnitt (40) abgesehen von einer beweglichen Durchgangsfensteranordnung (104) für die Verbindungseinrichtung (68) des Transportwagens (42) abdeckt, wenn sich der Transportwagen (42) in dem Kurvenabschnitt (40) befindet;
**dadurch gekennzeichnet, dass**
d) die Abschirmeinrichtung (102) eine Vielzahl von insbesondere aneinander angrenzenden Abschirmelementen (106) umfasst, und
da) jedes Abschirmelement (106) mittels einer Lagereinrichtung (108) um eine vertikale Schwenkachse (108) verschwenkbar gelagert ist;
oder
db) die Abschirmelemente (106) an einem Endlosband (118) befestigt sind, welches um wenigstens zwei Umlaufrollen (120) umläuft, welche jeweils um eine vertikale Drehachse (122) verdrehbar sind, so dass ein Abschirmtrum (124) und ein Rückführtrum (126) gebildet sind;
oder
e) die Abschirmeinrichtung (102) ein um eine Drehachse (138) verdrehbares Drehelement (134) umfasst, welches einen Abschirmring (136) mit einem Außenradius Rₐ oder ein Abschirm-Ringsegment (144) mit einem Außenradius Rₐ definiert, wobei der Außenradius Rₐ größer ist als der Kurvenradius r des Kurvenabschnitts (40), in dem die Abschirmeinrichtung (102) angeordnet ist;
und/oder
f) die Transportwagen (42) eine oder mehrere Abdeckungen (116) mit sich führen, welche so angeordnet sind, dass sie sich im Förderraum (38) oberhalb der Durchgangsfensteranordnung (104) oder von sich öffnenden Durchgangsfenstern (114) befinden.

2. Behandlungsanlage nach Anspruch 1, **dadurch gekennzeichnet, dass** jedes Abschirmelement (106) gemäß Anspruch 1, Merkmal da), zwischen einer Abschirmstellung, in welcher es den Verbindungsdurchgang (96) abdeckt, und einer Freigabestellung, in welcher es von der Verbindungseinrichtung (68) eines der Transportwagen (42) passiert werden kann und ein Durchgangsfenster (114) der Durchgangsfensteranordnung (104) definiert, beweglich ist.

3. Behandlungsanlage nach Anspruch 2, **dadurch gekennzeichnet, dass** jedes Abschirmelement (106) gemäß Anspruch 1, Merkmal da), mittels seiner Lagereinrichtung (108) unter Federvorspannung in Richtung auf die Abschirmstellung vorgespannt ist.

4. Behandlungsanlage nach Anspruch 1, **dadurch gekennzeichnet, dass** wenigstens eine der Umlaufrollen (120) gemäß Anspruch 1, Merkmal db), mittels eines Motors (124) antreibbar ist.

5. Behandlungsanlage nach Anspruch 1 oder 4, **dadurch gekennzeichnet, dass** in wenigstens einem Abschnitt des Endlosbandes (118) gemäß Anspruch 1, Merkmal db), keine oder verkürzte Abschirmelemente (106) gibt, so dass dort ein Durchgangsfenster (114) der Durchgangsfensteranordnung (104) ausgebildet ist.

6. Behandlungsanlage nach Anspruch 1, 4 oder 5, **dadurch gekennzeichnet, dass** eine Führungsstruktur (130), insbesondere ein Führungsblech (132) oder Führungsrollen, für das Endlosband (118) gemäß Anspruch 1, Merkmal db), vorgesehen ist, welche derart eingerichtet ist, dass das Abschirmtrum (124) des Endlosbandes (118) dem gekrümmten Verlauf des Verbindungsdurchgangs (96) im Kurvenabschnitt (40) folgt, so dass die Abschirmelemente (106) sich beim Umlauf des Endlosbandes (118) im Bereich des Abschirmtrums (124) horizontal über den Verbindungsdurchgang (96) hinweg erstrecken.

7. Behandlungsanlage nach Anspruch 1, **dadurch gekennzeichnet, dass** das Drehelement (134) gemäß Anspruch 1, Merkmal e), mittels eines Motors (140) verdrehbar ist.

8. Behandlungsanlage nach Anspruch 1 oder 7, **dadurch gekennzeichnet, dass** der Abschirmring (136) oder das Abschirm-Ringsegment (144) gemäß Anspruch 1, Merkmal e), horizontal ausgerichtet ist.

9. Behandlungsanlage nach einem der Ansprüche 1, 7 oder 8, **dadurch gekennzeichnet, dass** der Abschirmring (136) gemäß Anspruch 1, Merkmal e) als Konus oder das Abschirm-Ringsegment (144) gemäß Anspruch 1, Merkmal e), konisch ausgebildet ist und in einen Auffangbehälter (142) münden.

10. Behandlungsanlage nach einem der Ansprüche 1, 7, 8 oder 9, **dadurch gekennzeichnet, dass** ein oder mehrere Durchgangsfenster (114) der Durchgangsfensteranordnung (104) durch eine oder mehrere radial außen am Abschirmring (136) gemäß Anspruch 1, Merkmal e) oder am Abschirm-Ringsegment (144) gemäß Anspruch 1, Merkmal e) vorgesehene Materialaussparungen ausgebildet sind.

## Claims

1. Treatment system for treating workpieces (12), in particular for treating vehicle bodies (14), having
a) a conveyor system (34) which comprises a multiplicity of transport trucks (42) by means of which the workpieces (12) are able to be conveyed on a conveyor section (36) that comprises one or a plurality of curved portions (40), wherein each transport truck (42) comprises a running gear (52) and a fastening installation (62) for at least one workpiece (12), said running gear (52) and said fastening installation (62) being coupled to one another by means of a connecting installation (68);
wherein
b) a running space (88) for the running gear (52) is present along the conveyor section (36), said running space (88), by way of a connecting passage (96) in the upward direction, being connected to a conveying space (38) in such a manner that the running gear (52) is movable in the running space (88) and the fastening installation (62) in the conveying space (38) is entrained, wherein the connecting installation (68) extends through the connecting passage (96) and wherein the connecting passage (96) in the curved portion (40) has a curved profile;
c) a shielding system (100) having a shielding installation (102) is provided, said shielding installation (102) in a curved portion (40), with the exception of a movable passage window assembly (104) for the connecting installation (68) of the transport truck (42), covering the connecting passage (96) when the transport truck (42) is situated in the curved portion (40);
**characterized in that**
d) the shielding installation (102) has a multiplicity of, in particular mutually adjacent, shielding elements (106), and
da) each shielding element (106) by means of a bearing installation (108) is mounted so as to be pivotable about a vertical pivot axis (108) ;
or
db) the shielding elements (106) are fastened to a continuous belt (108) which revolves about at least two revolving rollers (120) which are in each case rotatable about a vertical rotation axis (122) such that a shielding lead (124) and a returning lead (136) are formed;
or
e) the shielding installation (102) comprises a rotary element (134) which is rotatable about a rotation axis (138) and which defines a shielding ring (136) having an external radius Rₐ or an annular shielding segment (144) having an external radius Rₐ, wherein the external radius Rₐ is larger than the curve radius r of the curved portion (40) in which the shielding installation (102) is disposed;
and/or
f) the transport trucks (42) entrain one or a plurality of covers (116) which are disposed such that the latter, in the conveying space (38), are situated above the passage window assembly (104) or opening passage windows (114).

2. Treatment system according to Claim 1, **characterized in that** each shielding element (106) according to Claim 1, Feature da), is movable between a shielding position in which said shielding element (106) covers the connecting passage (96) and a releasing position in which said shielding element (106) can be passed through by the connecting installation (68) of one of the transport trucks (42) and defines a passage window (114) of the passage window assembly (104).

3. Treatment system according to Claim 2, **characterized in that** each shielding element (106) according to Claim 1, Feature da), by means of the bearing installation (108) thereof, while preloaded by a spring, is preloaded in the direction toward the shielding position.

4. Treatment system according to Claim 1, **characterized in that** at least one of the revolving rollers (120) according to Claim 1, Feature db), is able to be driven by means of a motor (124).

5. Treatment system according to Claim 1 or 4, **characterized in that** in at least one portion of the continuous belt (188) according to Claim 1, Feature db), there are no shielding elements (106), or shortened shielding elements (106), such that a passage window (114) of the passage window assembly (104) is configured therein.

6. Treatment system according to Claim 1, 4, or 5, **characterized in that** a guide structure (130), in particular a guide plate (132) or guide rollers, is provided for the continuous belt (118) according to Claim 1, Feature db), said guide structure (130) being specified in such a manner that the shielding lead (124) of the continuous belt (118) follows the curved profile of the connecting passage (96) in the curved portion (40) such that the shielding elements (106) extend horizontally across the connecting passage (96) in the region of the shielding lead (124) as the continuous belt (118) revolves.

7. Treatment system according to Claim 1, **characterized in that** the rotary element (134) according to Claim 1, Feature e), is rotatable by means of a motor (140) .

8. Treatment system according to Claim 1 or 7, **characterized in that** the shielding ring (136) or the annular shielding segment (144) according to Claim 1, Feature e), is aligned so as to be horizontal.

9. Treatment system according to one of Claims 1, 7, or 8, **characterized in that** the shielding ring (136) according to Claim 1, Feature e), is configured as a cone, or the annular shielding segment (144) according to Claim 1, Feature e), is configured so as to be conical, both opening into a collection container (142).

10. Treatment system according to one of Claims 1, 7, 8, or 9, **characterized in that** one or a plurality of passage windows (114) of the passage window assembly (104) is/are configured by one or a plurality of material clearances provided so as to be radially outside on the shielding ring (136) according to Claim 1, Feature e), or on the annular shielding segment (144) according to Claim 1, Feature e).

## Revendications

1. Installation de traitement pour le traitement de pièces (12), notamment pour le traitement de carrosseries de véhicules (14), comprenant :
a) un système d'acheminement (34), qui comprend une pluralité de chariots de transport (42), au moyen desquels les pièces (12) peuvent être acheminées sur une voie d'acheminement (36), qui comprend une ou plusieurs sections courbes (40), chaque chariot de transport (42) comprenant un châssis (52) et un appareil de fixation (62) pour au moins une pièce (12), qui sont couplés l'un à l'autre au moyen d'un appareil de liaison (68) ;
b) un espace de navigation (88) pour le châssis (52) étant présent le long de la voie d'acheminement (36), qui est relié par un passage de liaison (96) en direction du haut avec un espace d'acheminement (38), de telle sorte que le châssis (52) peut être déplacé dans l'espace de navigation (88) et l'appareil de fixation (62) l'accompagne dans l'espace d'acheminement (38), l'appareil de liaison (68) s'étendant à travers le passage de liaison (96) et le passage de liaison (96) ayant une allure incurvée dans la section courbe (40) ;
c) un système de blindage (100) muni d'un appareil de blindage (102) étant prévu, qui recouvre le passage de liaison (96) dans une section courbe (40) à l'exception d'un agencement de fenêtres de passage mobile (104) pour l'appareil de liaison (68) du chariot de transport (42) lorsque le chariot de transport (42) se trouve dans la section courbe (40) ;
**caractérisée en ce que**
d) l'appareil de blindage (102) comprend une pluralité d'éléments de blindage (106) notamment adjacents les uns aux autres, et
da) chaque élément de blindage (106) est monté de manière pivotante autour d'un axe de pivotement vertical (108) au moyen d'un appareil de montage (108) ;
ou
db) les éléments de blindage (106) sont fixés à une bande sans fin (118), qui circule autour d'au moins deux rouleaux de circulation (120), qui peuvent chacun être amenés à tourner autour d'un axe de rotation vertical (122), de telle sorte qu'une branche de blindage (124) et une branche de retour (126) sont formées ;
ou
e) l'appareil de blindage (102) comprend un élément rotatif (134) pouvant être amené à tourner autour d'un axe de rotation (138), qui définit un anneau de blindage (136) ayant un rayon extérieur Rₐ ou un segment d'anneau de blindage (144) ayant un rayon extérieur Rₐ, le rayon extérieur Rₐ étant supérieur au rayon de courbure r de la section courbe (40) dans laquelle l'appareil de blindage (102) est agencé ;
et/ou
f) les chariots de transport (42) sont accompagnés par un ou plusieurs couvercles (116), qui sont agencés de telle sorte qu'ils se trouvent dans l'espace d'acheminement (38) au-dessus de l'agencement de fenêtres de passage (104) ou de fenêtres de passage s'ouvrant (114).

2. Installation de traitement selon la revendication 1, **caractérisée en ce que** chaque élément de blindage (106) selon la revendication 1, caractéristique da), peut être déplacé entre une position de blindage, dans laquelle il recouvre le passage de liaison (96), et une position de dégagement, dans laquelle il peut être traversé par l'appareil de liaison (68) d'un des chariots de transport (42) et définit une fenêtre de passage (114) de l'agencement de fenêtres de passage (104) .

3. Installation de traitement selon la revendication 2, **caractérisée en ce que** chaque élément de blindage (106) selon la revendication 1, caractéristique da), est précontraint au moyen de son appareil de montage (108) avec une précontrainte élastique en direction de la position de blindage.

4. Installation de traitement selon la revendication 1, **caractérisée en ce qu'**au moins un des rouleaux de circulation (120) selon la revendication 1, caractéristique db), peut être entraîné au moyen d'un moteur (124).

5. Installation de traitement selon la revendication 1 ou 4, **caractérisée en ce qu'**il n'y a pas d'éléments de blindage (106) ou il y a des éléments de blindage (106) raccourcis dans au moins une section de la bande sans fin (118) selon la revendication 1, caractéristique db), de telle sorte qu'une fenêtre de passage (114) de l'agencement de fenêtres de passage (104) y est formée.

6. Installation de traitement selon la revendication 1, 4 ou 5, **caractérisée en ce qu'**une structure de guidage (130), notamment une plaque de guidage (132) ou un rouleau de guidage, est prévu pour la bande sans fin (118) selon la revendication 1, caractéristique db), qui est conçu de telle sorte que la branche de blindage (124) de la bande sans fin (118) suit l'allure incurvée du passage de liaison (96) dans la section courbe (40), de telle sorte que les éléments de blindage (106) s'étendent horizontalement sur le passage de liaison (96) lors de la circulation de la bande sans fin (118) dans la zone de la branche de blindage (124).

7. Installation de traitement selon la revendication 1, **caractérisée en ce que** l'élément rotatif (134) selon la revendication 1, caractéristique e), peut être amené à tourner au moyen d'un moteur (140).

8. Installation de traitement selon la revendication 1 ou 7, **caractérisée en ce que** l'anneau de blindage (136) ou le segment d'anneau de blindage (144) selon la revendication 1, caractéristique e), est orienté horizontalement.

9. Installation de traitement selon l'une quelconque des revendications 1, 7 ou 8, **caractérisée en ce que** l'anneau de blindage (136) selon la revendication 1, caractéristique e), est configuré sous la forme d'un cône ou le segment d'anneau de blindage (144) selon la revendication 1, caractéristique e), est configuré sous forme conique, et débouchent dans un contenant de collecte (142).

10. Installation de traitement selon l'une quelconque des revendications 1, 7, 8 ou 9, **caractérisée en ce qu'**une ou plusieurs fenêtres de passage (114) de l'agencement de fenêtres de passage (104) sont formées par un ou plusieurs évidements de matière prévus radialement à l'extérieur sur l'anneau de blindage (136) selon la revendication 1, caractéristique e), ou sur le segment d'anneau de blindage (144) selon la revendication 1, caractéristique e).
